# EUROPEAN PATENT APPLICATION

(11) **EP 4 609 966 A1**
(43) Date of publication of application: **03.09.2025**
(21) Application number: 24769845.9
(22) Date of filing: 07.03.2024
(51) Int. Cl.: B21D 26/033, B22D 19/16, B22D 17/00, B29C 45/10

(54) **DEVICE FOR MULTI-ELEMENT MATERIAL MIXED FORMING IN ONE TIME OF MOLD OPENING/CLOSING**

(30) Priority: 13.03.2023 CN 202310235304
(71) Applicant: INTELLIGENT AEROSPACE MANUFACTURING TECHNOLOGY (BEIJING) CO., LTD., Beijing 100083 (CN)
(72) Inventor: CHENG, Pengzhi, Beijing 100083 (CN); LI, Xiaoqiang, Beijing 100083 (CN); CHENG, Gang, Beijing 100083 (CN); XIE, Yasu, Beijing 100083 (CN); RUAN, Shangwen, Beijing 100083 (CN); ZHANG, Shenglun, Beijing 100083 (CN); SONG, Kai, Beijing 100083 (CN); DING, Zhen, Beijing 100083 (CN)
(74) Representative: Bayramoglu et al.
(86) International application number: PCT/CN2024/080589
(87) International publication number: WO 2024/188152

(57) **Abstract**

A multi-material hybrid forming device based on single mold opening and closing includes a feeding conveyor line (1), a main machine (2), an unloading conveyor line (3), a demolding agent spraying robot (4), an ultra-high-pressure medium system (5), a mold temperature control system (6), a non-metal injection system (7), a metal injection system (8), a high-power heating system (9), a demolding agent injection system (10), and a component handling system (11). By connecting an injection module (27) to different material injection systems or the ultra-high-pressure medium system, multiple different metal and non-metal injection devices are integrated onto one device platform, such that non-metal injection, metal injection and bulging media injection are achieved in a single mold opening and closing cycle, and instantaneous heating, conformal gas bulging, quench hardening, non-metal injection and metal injection of an ultra-high-strength metal tube are achieved in a single mold opening and closing cycle. The present disclosure is suitable for integrated manufacturing of automotive sub-assembly components.

## Description

### TECHNICAL FIELD

The present disclosure belongs to the technical field of automotive tubular beam component production, and in particular relates to a multi-material hybrid forming device based on single mold opening and closing.

### BACKGROUND TECHNOLOGY

The design and processing techniques of tubular beam structural components determine vehicle evaluation metrics such as safety, reliability/durability, and noise, vibration, and harshness (NVH). However, traditional integrated die-casting and stamping-welding processes used in manufacturing steel tubular beam structures exhibit certain limitations in enhancing vehicle performance and lightweight optimization.

Although an integrated die-casting process has been widely adopted in the automotive industry, it is constrained by casting-suitable materials such as aluminum alloys and magnesium alloys with insufficient strength (yield strength around 300 MPa). Consequently, this process is not suitable for manufacturing slim tubular beam structural components and sub-assemblies in upper body structures, such as A-pillar and B-pillar sub-assembly components. The integrated die-casting of large automotive components such as body side panels presents challenges including excessive mold closing force, significant component deformation, insufficient local strength in slim components such as A-pillar tubular beams, along with complex manufacturing processes and high costs.

The integrated injection molding process for traditional tubular beams and connectors is confined to finished tubular beams and post-hydroforming injection molding. It fails to apply treatments such as heating, conformal gas bulging, and quenching to the main load-bearing tube blanks, thereby compromising the geometry and mechanical strength of profiled tubular beams. Furthermore, this process introduces an additional connection procedure instead of integrating the synchronous procedure such as aluminum/magnesium injection.

The existing hydroforming process for tubular components involves sealing both ends of the metal tube in a cold state, and injecting a high-pressure liquid into the tube cavity to force the raw metal tube to conform to the mold. It typically uses a hydroforming machine, featuring cold-state liquid filling and low-yield-strength materials. Ultra-high-strength titanium alloys with elevated yield strength are unsuitable for hydroforming due to their incompatibility with cold-state processing and the requirement for an excessively high mold closing force.

Hybrid forming targets cold-state formed components, such as those to be assembled on metal structural components through plastic fasteners (e.g., automotive instrument panel brackets). The current hybrid forming process combines tube hydroforming with injection molding to form an integrated structure within a single process cycle. However, this method employs simplified temperature control with forming temperatures only around 200°C, which excludes quenching processes.

In summary, existing hot gas bulging, injection molding, die-casting, and hydroforming processes are all single-stage operations incapable of producing composite-structured components. Besides, the hybrid forming is limited to cold-formed components and unsuitable for high-strength materials.

To ensure that the body structures meet rigidity, strength, and lightweight requirements, the present disclosure proposes a multi-material hybrid forming device based on single mold opening and closing. The multi-material includes metal materials such as ultra-high-strength steel/aluminum alloy tubes and aluminum/magnesium, and non-metal materials such as fiber-reinforced resins. The ultra-high-strength steel tube (e.g. aluminum alloy tube) is subjected to instantaneous heating, conformal gas bulging, quench hardening, injection molding (non-metal materials such as fiber-reinforced resins), and aluminum/magnesium (metal) injection in a single mold opening and closing cycle. The present disclosure greatly simplifies a body manufacturing process and eliminates subsequent welding and other processes, thereby enabling lightweight tubular beam structural components, and suiting integrated manufacturing of ultra-high-strength tubular beam structures with profiled cross-sections.

### CONTENT OF THE INVENTION

The present disclosure relates to a multi-material hybrid forming device based on single mold opening and closing, including:
a main machine, including a mold cavity, and configured to open and close the mold cavity, where the mold cavity includes a hot gas bulging cavity for a metal tube blank;
an ultra-high-pressure medium system, configured to perform loading, pressure maintenance and recovery of an ultra-high-pressure bulging medium during a hot gas bulging process of the metal tube blank, where the ultra-high-pressure medium system injects a first-pressure high-pressure bulging medium into the metal tube blank with two ends sealed, such that a wall of the metal tube blank conforms to a mold; and
a mold temperature control system, configured to heat or cool the mold cavity;
where, the mold cavity further includes: a first-material forming cavity, where the first-material forming cavity is located between an inner wall of the mold cavity and an outer wall of the metal tube blank processed by hot gas bulging; and
a first-material injection system, connected to the mold cavity, and configured to inject a first material in a liquid or semi-solid state into the first-material forming cavity to integrally form and bond the first material onto the metal tube blank processed by hot gas bulging, where the first material differs from a material of the metal tube blank.

The ultra-high-pressure medium system is further configured to perform, during the hot gas bulging process of the metal tube blank, loading, pressure maintenance and recovery of a bulging medium in the first-material forming cavity, so as to control a deformation amount at a local position of the metal tube blank.

The mold cavity further includes: a second-material forming cavity, where the second-material forming cavity is located between the inner wall of the mold cavity and the outer wall of the metal tube blank processed by hot gas bulging; and
a second-material injection system, connected to the mold cavity, and configured to inject a second material in the liquid or semi-solid state into the second-material forming cavity to integrally form and bond the second material onto the metal tube blank processed by bulging, where the second material differs from the first material and the material of the metal tube blank.

The ultra-high-pressure medium system is further configured to perform, during the hot gas bulging process of the metal tube blank and a forming process of the first-material, loading, pressure maintenance and recovery of a bulging medium in the second-material forming cavity, so as to control a deformation amount at a local position of the metal tube blank;
alternatively,
the ultra-high-pressure medium system performs, during the hot gas bulging process of the metal tube blank, loading, pressure maintenance and recovery of bulging media in the first-material forming cavity and the second-material forming cavity, so as to control the deformation amount at the local position of the metal tube blank.

The main machine further includes a detachably connected injection module; and the injection module is connected to different material injection systems or the ultra-high-pressure medium system.

The injection module includes a mounting plate, where different mounting plates are provided with ports compatible with different material injection systems, or material runner ports at different positions, or different bulging medium ports; and the mounting plate is replaceable to achieve rapid replacement of an injection material or a bulging medium.

The first material is a metal; the first-material injection system includes a barrel for accommodating the first material; and the barrel has heating and stirring functions to melt the first material into the liquid or semi-solid state for injection into the mold cavity.

The second material is a non-metal; the second-material injection system includes a barrel for accommodating the second material; and the barrel has heating and stirring functions to melt the second material into the liquid or semi-solid state for injection into the mold cavity.

An ultra-high-pressure bulging medium and a low-pressure bulging medium include gas, water, oil, or a low-melting-point metal.

The first material is aluminum, magnesium, or an aluminum-magnesium alloy, and the second material is a plastic or a composite material such as fiber-reinforced resin.

The device of the present disclosure employs a universal integrated framework. By replacing the injection module, multiple metal/non-metal injection systems can be integrated onto a single platform, reducing device costs while enhancing forming efficiency. The injection of a non-metal (e.g., plastic, fiber-reinforced resin), a metal (e.g., aluminum/magnesium/aluminum-magnesium alloy), and various bulging media are performed in a single mold opening and closing cycle.

The device of the present disclosure completes multiple processes of the ultra-high-strength metal tube (e.g., aluminum alloy tube) in a single mold opening and closing cycle: instantaneous heating, conformal gas bulging, quench hardening, non-metal (e.g., plastic, fiber-reinforced resin) injection, and metal (e.g., aluminum/magnesium/aluminum-magnesium alloy) injection. The present disclosure is suitable for integrated manufacturing of automotive sub-assembly components.

### DESCRIPTION OF THE DRAWINGS

FIG. 1 is a structural schematic diagram of a device according to the present disclosure;
FIG. 2 is a structural schematic diagram of a main machine according to the present disclosure;
FIG. 3 is a structural schematic diagram of a lower beam according to the present disclosure;
FIG. 4 is a structural schematic diagram of an injection module according to the present disclosure;
FIG. 5 is a process flowchart according to the present disclosure;
FIG. 6 is a schematic diagram of loading a metal tube blank into a mold according to the present disclosure;
FIG. 7 is a schematic diagram of bulging the metal tube blank according to the present disclosure;
FIG. 8 is a schematic diagram of injecting a metal according to the present disclosure;
FIG. 9 is a schematic diagram of injecting a non-metal according to the present disclosure;

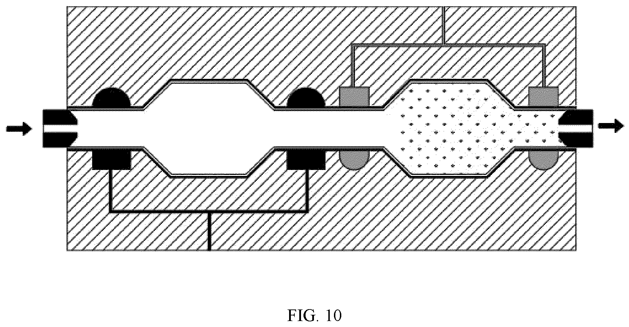

FIG. 10 is a schematic diagram of bulging medium depressurization and quenching for a tubular beam according to the present disclosure; and

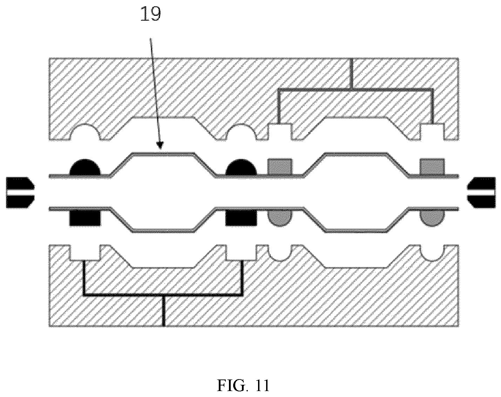

FIG. 11 is a schematic diagram of demolding a tubular beam product according to the present disclosure.

Reference Numerals: 1. feeding conveyor line; 2. main machine; 3. unloading conveyor line; 4. demolding agent spraying robot; 5. ultra-high-pressure medium system; 6. mold temperature control system; 7. non-metal injection system; 8. metal injection system; 9. high-power heating system; 10. demolding agent injection system; and 11. component handling system;
main machine: 21. drive unit (typically hydraulic cylinder or motor); 22. mold locking device; 23. upper beam; 24. guide tie bar; 25. slider; 26. lower beam; and 27. injection module;
lower beam: 261. side-push oil cylinder; 262. electrode; and 263. port;
injection module: 271. mounting plate; 272. metal injection runner port; and 273. non-metal injection runner port; and
111. metal tube blank; 13. non-metal injection runner; 14. mold; 15. metal injection runner; 16. bulging medium; 17. non-metal injection space; and 18. metal injection space.

### SPECIFIC IMPLEMENTATIONS

The following clearly and completely describes the technical solutions of the present disclosure with reference to drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In the description of the present disclosure, it should be noted that orientations or position relationships indicated by terms such as "center", "top", "bottom", "left", "right", "vertical", "horizontal", "inner", and "outer" are based on the orientation or position relationships shown in the drawings, for ease of describing the present disclosure and simplifying the description only, rather than indicating or implying that the indicated device or element must have a particular orientation or be constructed and operated in a particular orientation. Therefore, these terms should not be understood as a limitation to the present disclosure. Moreover, the terms "first", "second", and "third" are used only for the purpose of description, and are not intended to indicate or imply relative importance.

In the description of the present disclosure, it should be noted that, unless otherwise clearly specified, meanings of terms "mount", "connected with", and "connected to" should be understood in a broad sense. For example, the connection may be a fixed connection, a removable connection, or an integral connection; may be a mechanical connection or an electrical connection; may be a direct connection or an indirect connection by using an intermediate medium; or may be intercommunication between two elements. Those of ordinary skill in the art may understand specific meanings of the foregoing terms in the present disclosure based on a specific situation.

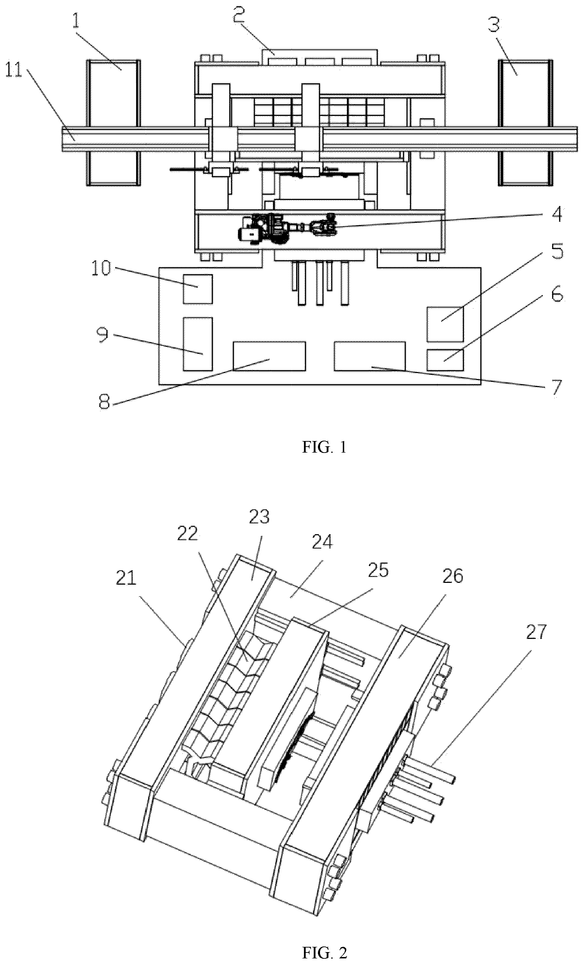

As shown in FIG. 1, a multi-material hybrid forming device based on single mold opening and closing includes feeding conveyor line 1, main machine 2, unloading conveyor line 3, demolding agent spraying robot 4, ultra-high-pressure medium system 5, mold temperature control system 6, non-metal material injection system 7, metal material injection system 8, high-power heating system 9, demolding agent injection system 10, and component handling system 11.

The feeding conveyor line 1 is typically configured to feed a metal tube blank through a belt conveyor or pneumatic slide table. The metal tube blank is an ultra-high-strength steel tube or aluminum alloy tube.

The main machine 2 includes a mold cavity, and is configured to open and close a mold. As shown in FIG. 2, the main machine includes drive unit 21, mold locking device 22, upper beam 23, guide tie bars 24, slider 25, lower beam 26, and injection module 27. Four guide tie bars 24 are fixedly connected to peripheries of the upper beam 23 and the lower beam 26 to form an integral frame. The drive unit 21 and the mold locking device 22 are provided on the upper beam 23. The drive unit provides power for movement of the slider 25, and provides a mold closing force for the mold. Preferably, the drive unit is a hydraulic cylinder or a motor. The mold locking device 22 locks the mold to a closed state. The mold locking device ensures mold cavity conformation and provides an auxiliary closing force to reduce output power of the drive unit 21. The guide tie bars 24 guide movement of the slider 25. The slider 25 is provided with the mold and drives the mold to close through the slider. The lower beam 26 is provided with the injection module 27.

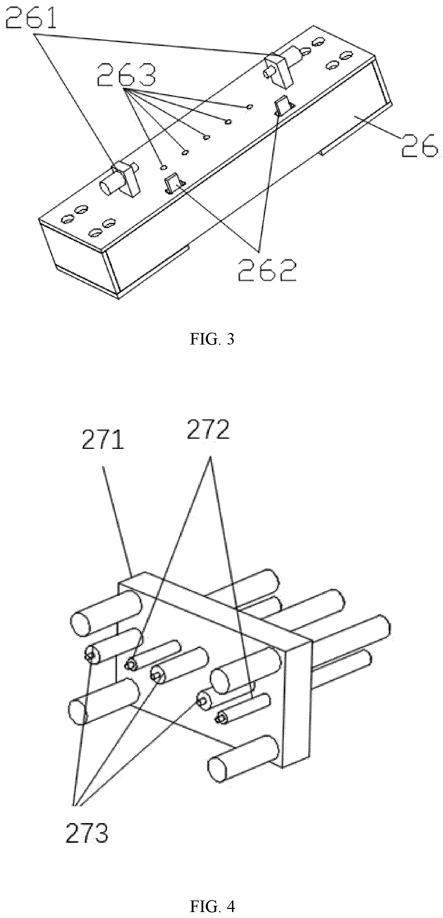

As shown in FIG. 3, two side-push oil cylinders 261 are respectively provided on two sides of an upper end of the lower beam. The two side-push oil cylinders 261 are configured to seal two ends of the metal tube blank during a forming process. The lower beam is provided with electrode 262. The electrode includes one terminal connected to the high-power heating power supply 9 through a conductor and the other terminal connected to an electrode on the mold, and is configured to perform heating during component forming. The lower beam 26 is detachably connected to the injection module 27.

Specifically, as shown in FIG. 4, the injection module 27 includes mounting plate 271. The lower beam 26 is detachably connected to the mounting plate 271 of the injection module 27. The mounting plate 271 is provided with metal injection runner port 272, non-metal injection runner port 273 or a bulging medium port. An injection material is rapidly replaced through replacement of the mounting plate. The unloading conveyor line 3 conveys a formed workpiece and has a component buffering function. The unloading conveyor line typically adopts a stainless steel structure or a steel plate chain structure.

The demolding agent spraying robot 4 sprays a demolding agent on a surface of the mold cavity before each component enters the mold cavity, facilitating demolding of formed components. The demolding agent spraying robot 4 is connected to the demolding agent injection system through a tubing. The demolding agent spraying robot adopts a six-axis robot or a gantry robot with a demolding agent spraying end-effector.

Regarding the ultra-high-pressure medium system 5, the ultra-high-pressure medium system 5 is configured to perform loading, pressure maintenance and recovery of an ultra-high-pressure bulging medium during hot gas bulging of the metal tube blank, as well as outputting of a low-pressure bulging medium. Preferably, the bulging medium is any one of gas, water, oil or low-melting-point metal. Preferably, the bulging medium is nitrogen or inert gas, and the low-melting-point metal is tin.

The mold temperature control system 6 injects a medium at a certain temperature into the mold through a tubing to heat or cool the component in the mold.

The non-metal material injection system 7 includes a non-metal injection runner and a non-metal material injection barrel. The non-metal material injection barrel is connected to the mold cavity of the main machine 2 through the non-metal injection runner, and is configured to inject a non-metal medium into the mold cavity. The non-metal material injection barrel accommodates the non-metal medium required for component forming, and possesses heating and stirring functions to melt the solid non-metal medium into a liquid or semi-solid non-metal medium for injection into the mold cavity.

The metal material injection system 8 includes a metal injection runner and a metal material injection barrel. The metal material injection barrel is connected to the mold cavity of the main machine 2 through the metal injection runner, and is configured to inject a metal medium into the mold cavity. The metal material injection barrel accommodates the metal medium required for component forming, and possesses heating and stirring functions to melt the solid metal medium into a liquid or semi-solid metal medium for injection into the mold cavity.

The high-power heating system 9 is connected to the electrode through a conductor, and is configured to perform component heating in the mold cavity.

The demolding agent injection system 10 is configured to store and deliver the demolding agent, and is connected to the demolding agent spraying robot through a demolding agent tubing so as to spray the demolding agent into the mold cavity.

Regarding the component handling system 11, the component handling system includes a feeding manipulator, an unloading manipulator, and a gantry frame to perform feeding and unloading handling during production. The manipulator possesses high-temperature resistance to prevent thermal damage during component grasping. The component handling system is replaceable by two six-axis robots.

FIG. 2 illustrates core steps of a multi-material hybrid forming method based on single mold opening and closing. Specifically, the multi-material hybrid forming method based on single mold opening and closing includes the following steps.

The feeding conveyor line 1 deliver the metal tube blank to a feeding position. Simultaneously, the demolding agent spraying robot 4 and the demolding agent injection system 10 operate to spray the demolding agent into the mold cavity of the main machine 2. FIG. 3 is a schematic diagram of a type of the metal tube blank in the present disclosure. In terms of type, the metal tube blank includes steel tube blank 21, aluminum tube blank 21, carbon-clad tube 22, and carbon-clad tube 23 filled with a reinforcing material, etc. The carbon-clad tube is a metal tube blank cladded with a carbon fiber.

The component handling system 11 grasps and loads the metal tube blank into the mold cavity of the main machine 2. As shown in FIG. 4, the main machine moves to close the mold. The side-push oil cylinders of the main machine 2 move to seal the two ends of the metal tube blank by two end sealing plugs.

The high-power heating system 9 heats the metal tube blank to a specified temperature through the electrode, and the mold temperature control system 6 adjusts the mold cavity to a first specified temperature.

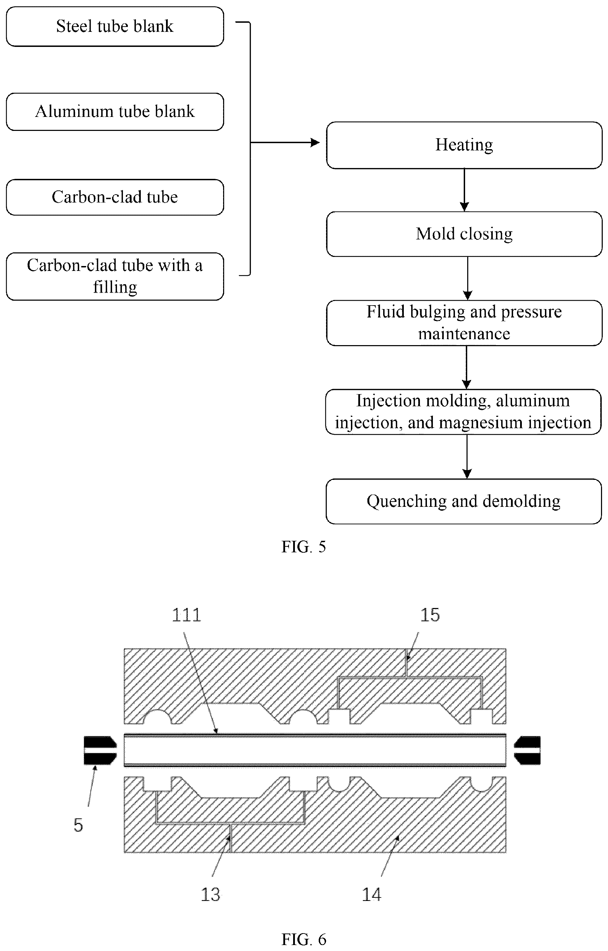

The metal tube blank is bulged. As shown in FIG. 5, the ultra-high-pressure medium system 5 injects a first-pressure high-pressure bulging medium (e.g., high-pressure gas) into an end port of the metal tube blank at one side. The first-pressure high-pressure bulging medium causes a wall of the metal tube blank to conform to the mold through high-pressure bulging. The ultra-high-pressure medium system 5 injects a first-pressure bulging medium (e.g., low-pressure gas) into a space inside the mold cavity and outside the metal tube blank to control a deformation amount at a local position of the metal tube blank. Preferably, the first-pressure bulging medium is injected and withdrawn through the metal injection runner 15 and the non-metal injection runner 13, respectively.

A metal is injected. As shown in FIG. 6, the first-pressure bulging medium is depressurized and recovered. The mold temperature control system 6 adjusts the mold cavity to a second specified temperature. The second specified temperature is less than or equal to the first specified temperature. The metal injection system 8 injects a liquid or semi-solid metal (e.g., aluminum-magnesium alloy) into a metal injection space inside the mold cavity and outside the metal tube blank through the metal injection barrel, enabling integral forming and bonding of the metal onto the metal tube blank processed by bulging. During the entire metal injection process, the ultra-high-pressure medium system 5 injects a third-pressure bulging medium into the metal tube blank to control a deformation amount at a local position of the tube blank. During the entire metal injection process, the ultra-high-pressure medium system 5 injects a second-pressure bulging medium into a space outside the metal injection space inside the mold cavity and outside the metal tube blank to control a deformation amount at a local position of the metal tube blank.

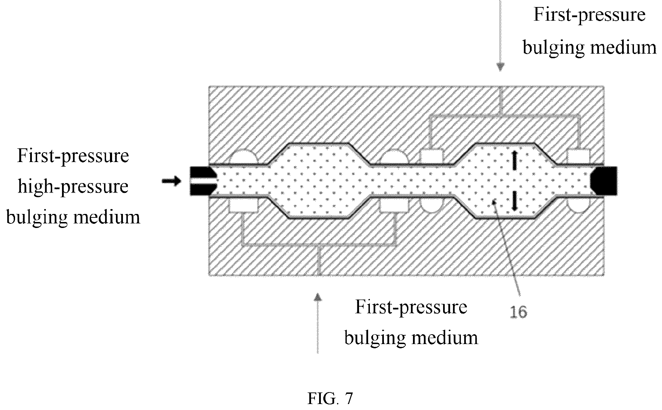

A non-metal is injected. As shown in FIG. 7, the second-pressure bulging medium is depressurized and recovered. The mold temperature control system 6 adjusts the mold cavity to a third specified temperature. The third specified temperature is less than the first specified temperature and the second specified temperature. The non-metal injection system 7 injects a liquid or semi-solid non-metal (e.g., plastic) into the non-metal injection space inside the mold cavity and outside the metal tube blank through the non-metal injection barrel, enabling integral forming and bonding of the non-metal onto the metal tube blank processed by bulging. During the entire non-metal injection process, the ultra-high-pressure medium system injects a fourth-pressure bulging medium into the metal tube blank to control a deformation amount at a local position of the tube blank.

Preferably, the metal injection step and the non-metal injection step of the present disclosure are performable simultaneously to improve efficiency.

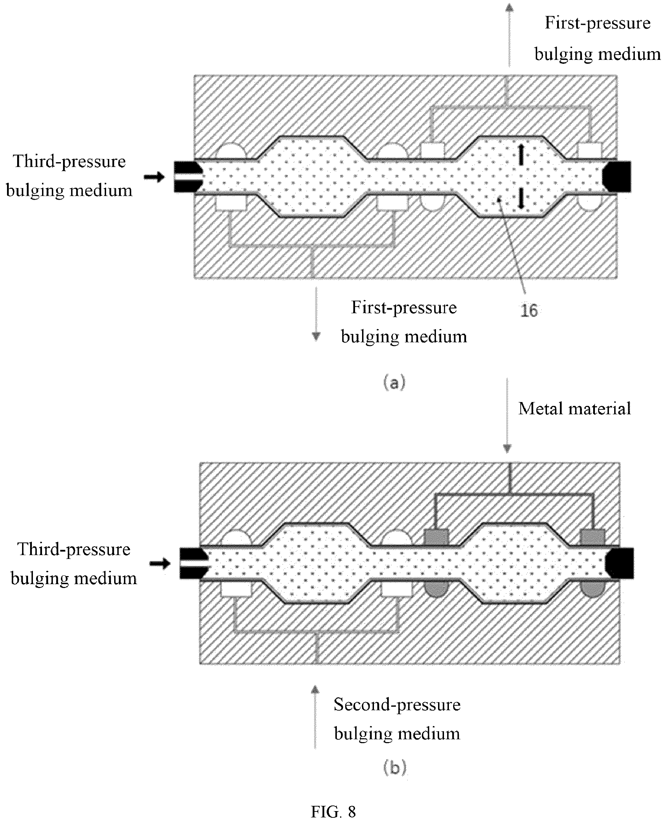

The bulging medium is depressurized and recovered, and in-mold rapid quenching is performed, as shown in FIG. 8.

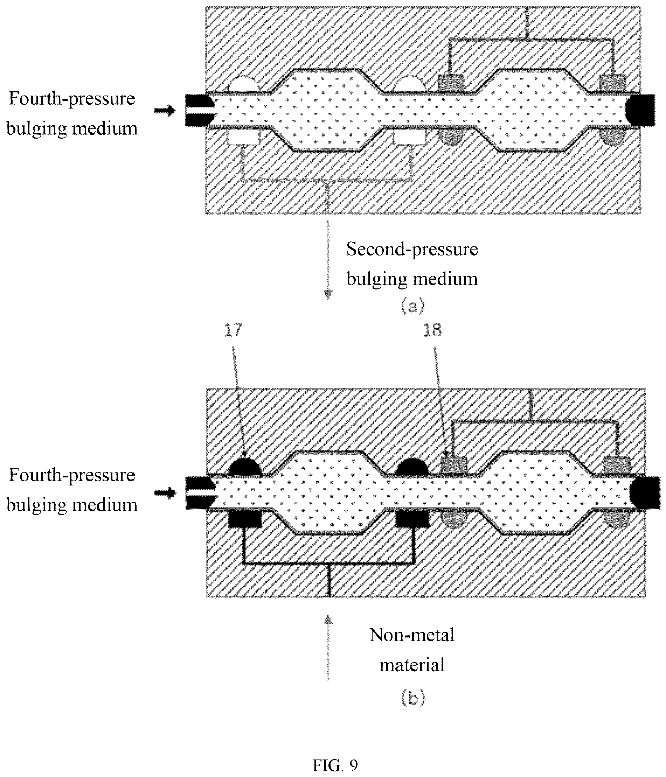

When the forming process is completed, the main machine 2 opens the mold. The component handling system 11 grasps and loads a multi-material component formed by hybrid forming to the unloading conveyor system 3. The unloading conveyor system conveys the formed component to a designated position, as shown in FIG. 9.

It should be understood that the serial number of each step in the embodiment of the present disclosure does not indicate the order of performing the process. The order of performing each process is determined by its function and internal logic, and should not limit the implementation of the embodiments of the present disclosure.

Although the embodiments of the present disclosure have been illustrated and described, it should be understood that those of ordinary skill in the art may make various changes, modifications, replacements and variations to the above embodiments without departing from the principle and spirit of the present disclosure, and the scope of the present disclosure is limited by the appended claims and their legal equivalents.

## Claims

1. A multi-material hybrid forming device based on single mold opening and closing, comprising:
a main machine, comprising a mold cavity, and configured to open and close the mold cavity, wherein the mold cavity comprises a hot gas bulging cavity for a metal tube blank;
an ultra-high-pressure medium system, configured to perform loading, pressure maintenance and recovery of an ultra-high-pressure bulging medium during a hot gas bulging process of the metal tube blank, wherein the ultra-high-pressure medium system injects a first-pressure high-pressure bulging medium into the metal tube blank with two ends sealed, such that a wall of the metal tube blank conforms to a mold; and
a mold temperature control system, configured to heat or cool the mold cavity;
**characterized in that**:
the mold cavity further comprises: a first-material forming cavity, wherein the first-material forming cavity is located between an inner wall of the mold cavity and an outer wall of the metal tube blank processed by hot gas bulging; and
a first-material injection system, connected to the mold cavity, and configured to inject a first material in a liquid or semi-solid state into the first-material forming cavity to integrally form and bond the first material onto the metal tube blank processed by hot gas bulging, wherein the first material differs from a material of the metal tube blank.

2. The forming device according to claim 1, **characterized in that** the ultra-high-pressure medium system is further configured to perform, during the hot gas bulging process of the metal tube blank, loading, pressure maintenance and recovery of a bulging medium in the first-material forming cavity, so as to control a deformation amount at a local position of the metal tube blank.

3. The forming device according to claim 1, **characterized in that** the mold cavity further comprises: a second-material forming cavity, wherein the second-material forming cavity is located between the inner wall of the mold cavity and the outer wall of the metal tube blank processed by hot gas bulging; and
a second-material injection system, connected to the mold cavity, and configured to inject a second material in the liquid or semi-solid state into the second-material forming cavity to integrally form and bond the second material onto the metal tube blank processed by bulging, wherein the second material differs from the first material and the material of the metal tube blank.

4. The forming device according to claim 3, **characterized in that** the ultra-high-pressure medium system is further configured to perform, during the hot gas bulging process of the metal tube blank and a forming process of the first-material, loading, pressure maintenance and recovery of a bulging medium in the second-material forming cavity, so as to control a deformation amount at a local position of the metal tube blank;
alternatively,
the ultra-high-pressure medium system performs, during the hot gas bulging process of the metal tube blank, loading, pressure maintenance and recovery of bulging media in the first-material forming cavity and the second-material forming cavity, so as to control the deformation amount at the local position of the metal tube blank.

5. The forming device according to any one of claims 1 to 4, **characterized in that** the main machine further comprises a detachably connected injection module; and the injection module is connected to different material injection systems or the ultra-high-pressure medium system.

6. The forming device according to claim 5, **characterized in that** the injection module comprises a mounting plate, wherein different mounting plates are provided with ports compatible with different material injection systems, or material runner ports at different positions, or different bulging medium ports; and the mounting plate is replaceable to achieve rapid replacement of an injection material or a bulging medium.

7. The forming device according to any one of claims 1 to 4, **characterized in that** the first material is a metal; the first-material injection system comprises a barrel for accommodating the first material; and the barrel has heating and stirring functions to melt the first material into the liquid or semi-solid state for injection into the mold cavity.

8. The forming device according to any one of claims 3 and 4, **characterized in that** the second material is a non-metal; the second-material injection system comprises a barrel for accommodating the second material; and the barrel has heating and stirring functions to melt the second material into the liquid or semi-solid state for injection into the mold cavity.

9. The forming device according to any one of claims 2 to 4, **characterized in that** an ultra-high-pressure bulging medium and a low-pressure bulging medium comprise gas, water, oil, or a low-melting-point metal.

10. The forming device according to any one of claims 3 and 4, **characterized in that** the first material is aluminum, magnesium, or an aluminum-magnesium alloy, and the second material is a plastic or a composite material.
